(19) Europäisches Patentamt
European Patent Office
Office européen des brevets

(11) **EP 3 203 167 B1**

(12) **EUROPEAN PATENT SPECIFICATION**

(45) Date of publication and mention
of the grant of the patent:
**08.12.2021   Bulletin 2021/49**

(51) Int Cl.:
*F25D 11/00* (2006.01)      *F25B 49/02* (2006.01)
*H02J 3/00* (2006.01)       *G06Q 50/06* (2012.01)
*F25B 1/00* (2006.01)

(21) Application number: **14903106.4**

(22) Date of filing: **29.09.2014**

(86) International application number:
**PCT/JP2014/075934**

(87) International publication number:
**WO 2016/051472 (07.04.2016 Gazette 2016/14)**

(54) **POWER AMOUNT MANAGEMENT DEVICE FOR COOLING SYSTEM**

VORRICHTUNG ZUR VERWALTUNG DER ENERGIEMENGE FÜR KÜHLSYSTEME

DISPOSITIF DE GESTION DE QUANTITÉ DE PUISSANCE POUR SYSTÈME DE REFROIDISSEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.08.2017   Bulletin 2017/32**

(73) Proprietor: **Mitsubishi Electric Corporation Chiyoda-ku Tokyo 100-8310 (JP)**

(72) Inventors:
• **MAEDA, Migifumi**
  **Tokyo 100-8310 (JP)**
• **NAKAGAWA, Masahiko**
  **Tokyo 100-8310 (JP)**
• **MORIKAWA, Satoshi**
  **Tokyo 100-8310 (JP)**
• **NAKAMURA, Ataru**
  **Tokyo 100-8310 (JP)**

(74) Representative: **Pfenning, Meinig & Partner mbB Patent- und Rechtsanwälte Joachimsthaler Straße 10-12 10719 Berlin (DE)**

(56) References cited:
**JP-A- H05 133 590      JP-A- 2003 130 435
JP-A- 2005 201 482      JP-A- 2005 241 189
JP-A- 2006 118 811      JP-A- 2008 275 216
JP-A- 2011 047 564      JP-A- 2014 013 612
JP-A- 2014 129 935      US-A1- 2012 204 582**

• **None**

**Description**

Technical Field

The present invention relates to an electric energy management apparatus that manages electric energy (power) of a cooling system that includes a plurality of cooling apparatuses to cool or freeze an object.

Background Art

Refrigeration cycle systems are known that include a refrigerant circuit composed of one or a plurality of heat source units (outdoor units) and a plurality of load-side units (indoor units). In such refrigeration cycle systems, electric energy management is performed. In the case where a plurality of users are utilizing the air-conditioning system designed to air-condition living spaces and the like using the refrigeration cycle, not only the electric energy of the indoor units utilized by each user but also the electric energy of the outdoor unit may be proportionally distributed in a predetermined period (e.g., one month, one hour, and so forth). An electricity charge based on the proportionally distributed electric energy is billed to each of the users.
The proportional distribution of the electric energy of the outdoor unit is performed on the basis of the amount of refrigerant that has passed each of the indoor units. In this process, the air-conditioning system can calculate the amount of refrigerant that has passed each of the indoor units on the basis of the status of each indoor unit and the opening degree of the indoor unit electronic expansion valve (expansion device, flow rate control device) in each indoor unit (see, for example, Patent Literature 1). It is also known from prior art that air conditioner operation information and electric energy measured by watt-hour meters of an air conditioner are monitored in order to determine whether or not they are within predetermined ranges, a current electric energy to be distributed being estimated when they are out of the ranges (see Patent Literature 2).

Citation List

Patent Literature

Patent Literature 1: Japanese Patent Application Publication No. 2003-322381 (Claim 9, etc.)
Patent Literature 2: Japanese Patent Application Publication No. 2003-130435

Summary of Invention

Technical Problem

Now, existing refrigeration cycle systems include cooling systems that employ a cooling apparatus (cryogenic equipment) that makes, for example, an indoor space cooler than an air-conditioned environment, in order to cool or freeze the objects. Regarding flow rate control in such a cooling system, in general, a thermostatic expansion valve is provided in the load-side unit such as a showcase, to control the amount of refrigerant that passes through an evaporator. Here, the thermostatic expansion valve refers to an expansion valve configured to vary the opening degree according to the temperature of the refrigerant flowing through a position of a pipe where a feeler bulb is attached.
In the cooling system, as described above, an active control of the opening degree of the expansion valve is not performed unlike in an air-conditioning system, and hence it is difficult to accurately recognize the amount of refrigerant flowing through the load-side unit (evaporator). It may be possible to estimate the electric energy of each of the load-side units, for example on the basis of the operation time, however sufficient estimation accuracy is unable to be obtained by such a method. In addition, providing a watt-hour meter for each of the load-side unit naturally leads to an increase in cost. Thus, it is difficult to attain sufficient accuracy of the electric energy management with respect to the cooling system.
The present invention has been accomplished in view of the foregoing situation, and provides an electric energy management apparatus for a cooling system, capable of carrying out the electric energy management of each load-side unit with higher accuracy.

Solution to Problem

In an embodiment, the present invention provides an electric energy management apparatus according to claim 1.

Advantageous Effects of Invention

With the electric energy management apparatus of one embodiment of the present invention, the overall electric energy of the cooling system is divided for each of the refrigerating machines (refrigerant circuits), and the electric energy involved with the refrigerant circulation contributing to the actual cooling is proportionally distributed according to the capacity of each of the load-side units. Such an arrangement enables the overall electric energy of the cooling system to be proportionally distributed properly to each of the load-side units.

Brief Description of Drawings

[Fig. 1] Fig. 1 is a block diagram showing a configuration of a cooling system under control of an electric energy management apparatus 100 according to Embodiment 1 of the present invention.
[Fig. 2] Fig. 2 is a schematic diagram showing a configuration of a refrigerating machine 210 and a load-side unit 220 according to Embodiment 1 of the present invention.
[Fig. 3] Fig. 3 is a block diagram showing a configuration of the electric energy management apparatus 100 according to Embodiment 1 of the present invention.
[Fig. 4] Fig. 4 includes reference tables for explaining electric energy of the refrigerating machine 210 according to Embodiment 1 of the present invention.
[Fig. 5] Fig. 5 is a block diagram showing a configuration of the electric energy management apparatus 100 according to Embodiment 2 of the present invention.

Description of Embodiments

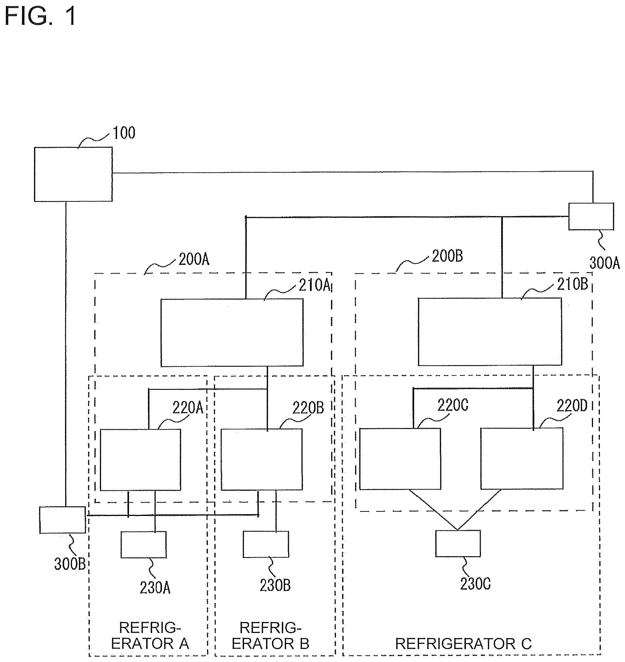

Hereafter, electric energy management apparatuses according to Embodiments of the present invention will be described with reference to the drawings. In Fig. 1 and other drawings, elements given the same numeral in different drawings are the same or corresponding ones, which applies throughout the description of all Embodiments. In addition, throughout the description, the configuration of the elements is merely exemplary, and in no way intended to limit the feature of the present invention. In particular, combinations of the elements are not limited to those referred to in each Embodiment, but an element referred to in one Embodiment may be combined with an element referred to in another Embodiment. Further, a plurality of similar devices distinguished with subscripts or branch numbers may be denoted without the subscripts or branch numbers where it is not necessary to distinguish or identify the devices. In all the drawings, dimensional relationships among the elements illustrated in the drawings may differ from actual ones. The expressions of high or low regarding temperature or pressure does not represent a state related to a specific value, but is a relative expression made in relation with a condition or operation of the system or a device.

Embodiment 1

Fig. 1 is a block diagram showing a configuration of a cooling system under control of an electric energy management apparatus 100 according to Embodiment 1 of the present invention. As shown in Fig. 1, the cooling system according to Embodiment 1 includes a plurality of cooling apparatuses 200 (200A and 200B). The cooling apparatus 200 constitutes a refrigerant circuit composed of one or a plurality of refrigerating machines (condensing units) 210 acting as heat source-side unit, and one or a plurality of load-side units 220 (220A to 220D), the refrigerating machines 210 and the load-side units 220 being connected to each other via a non-illustrated refrigerant pipe. Remote controllers 230 (230A to 230C) transmit a signal indicating a target temperature and so forth, for example inputted by a user through a remote controller, to the load-side unit 220 to control the operation thereof. The remote controllers 230 (230A to 230C) also includes a display device that displays the status of the cooling apparatus 200, the temperature of the object, and so forth.

As shown in Fig. 1, in Embodiment 1 the refrigerating machine 210A is connected to the load-side unit 220A and the load-side unit 220B via the refrigerant pipe, so as to constitute the refrigerant circuit. Likewise, the refrigerating machine 210B is connected to the load-side unit 220C and the load-side unit 220D via the refrigerant pipe, so as to constitute the refrigerant circuit. The remote controller 230A controls the load-side unit 220A. The load-side unit 220A cools the space inside a refrigerator A. Likewise, the remote controller 230B controls the load-side unit 220B, which cools the space inside a refrigerator B. In addition, the remote controller 230C controls the load-side unit 220C and the load-side unit 220D. The load-side unit 220C and the load-side unit 220D cools the space inside a refrigerator C.

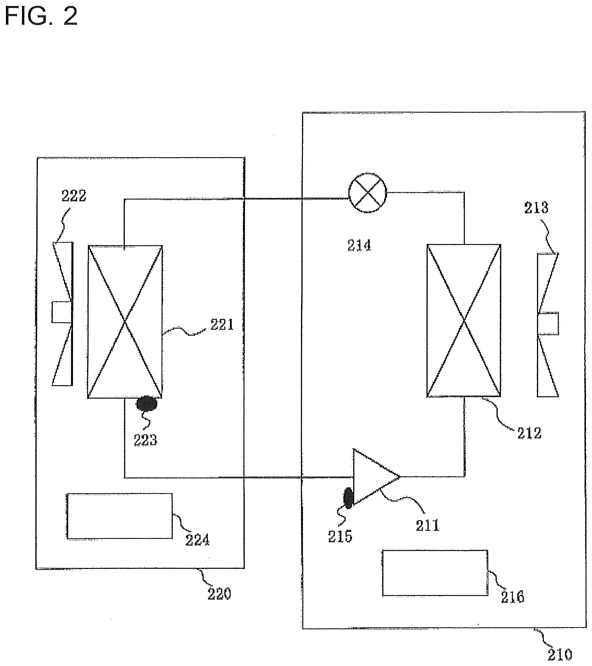

Fig. 2 is a schematic diagram showing a configuration of the refrigerating machine 210 and the load-side unit 220 according to Embodiment 1 of the present invention. The refrigerating machine 210 according to Embodiment 1 includes a compressor 211, a condenser 212, a refrigerating machine-side fan 213, a refrigerating machine flow rate control device 214, a crank case heater 215, and a refrigerating machine control unit 216. The compressor 211 compresses the refrigerant (gas) sucked thereinto, and delivers (discharges) the refrigerant with a specified pressure based on an operation frequency. The compressor 211 may be, as an example without limitation, an inverter compressor with variable capacity (amount of refrigerant delivered per unit time) including an inverter circuit, configured to vary the capacity by controlling the operation frequency as desired. The condenser 212, which is a heat exchanger, exchanges heat between the refrigerant passing therethrough and air. The refrigerating machine-side fan 213 supplies air to the condenser 212 necessary for the heat exchange. The refrigerating machine flow rate control device 214, for example including an expansion valve, controls the opening degree of the valve, depressurizes the refrigerant, and controls the flow rate of the refrigerant. Although in Embodiment 1 the refrigerating machine flow rate control device 214 is constituted of a thermostatic expansion valve, for example an electronic expansion valve that controls the opening degree according to an instruction of the refrigerating machine control unit 216 may be employed. The crank case heater 215, constituted of an electric heater for example, is attached on the oil sump of the compressor 211, to heat the refrigerating machine oil so as to prevent the refrigerant from being dissolved in the refrigerating machine oil, when the compressor 211 is turned off for a long time. Accordingly, the crank case heater 215 is constantly supplied with power, in Embodiment 1. The refrigerating machine control unit 216 controls the components provided in the refrigerating machine 210.

The load-side unit 220, which can be exemplified by a showcase or a unit cooler, includes an evaporator 221, a load-side fan 222, a defrost heater 223 and a load-side control unit 224. The evaporator 221, including for example a heat exchanger, exchanges heat with the refrigerant passing therethrough so as to cool the object. The load-side fan 222 supplies air necessary for the heat exchange to the evaporator 221, and also blows the air that has undergone the heat exchange into a room space. The defrost heater 223 serves to heat the evaporator 221 thereby defrosting the same. The load-side control unit 224 controls the components provided in the load-side unit 220.

Watt-hour meters 300 (300A and 300B) each measure the electric energy (kWh) of the cooling system. A total of the electric energy measured by the watt-hour meter 300A and the electric energy measured by the watt-hour meter 300B can be construed as the electric energy of the cooling system. The watt-hour meters 300 each transmit a signal including data of the measured electric energy to the electric energy management apparatus 100. In this process, the watt-hour meters 300 measure the power per unit time (kW) and integrate the value, to thereby calculate the electric energy (kWh) per predetermined time (e.g., 30 minutes). Then the watt-hour meters 300 transmit the signal indicating the electric energy (kWh) per predetermined time thus calculated to the electric energy management apparatus 100 at every predetermined time.

The watt-hour meter 300A measures a total of the electric energy consumed by each of the refrigerating machine 210A and the refrigerating machine 210B. More specifically, the watt-hour meter 300A measures the driving power for the compressor 211, the crank case heater 215, and the refrigerating machine-side fan 213 in each of the refrigerating machine 210A and the refrigerating machine 210B, as well as the power supplied to the load-side units 220C and 220D through the refrigerating machine. The power supplied to the load-side units through the refrigerating machine includes the driving power for the load-side fan 222 and the defrost heater 223.

Although in Embodiment 1 the driving power for the defrost heater 223 in each of the load-side unit 220C and the load-side unit 220D is indirectly measured by the watt-hour meter 300A, a watt-hour meter that directly measures the power system of the defrost heater 223, like the watt-hour meter 300B, may be additionally provided in the case where the power system of the driving power for the defrost heater 223 is not routed through the refrigerating machine.

The watt-hour meter 300B measures a total of the electric energy consumed by each of the load-side unit 220A and the load-side unit 220B. More specifically, the watt-hour meter 300B measures the driving power for the defrost heater 223 in each of the load-side unit 220A and the load-side unit 220B.

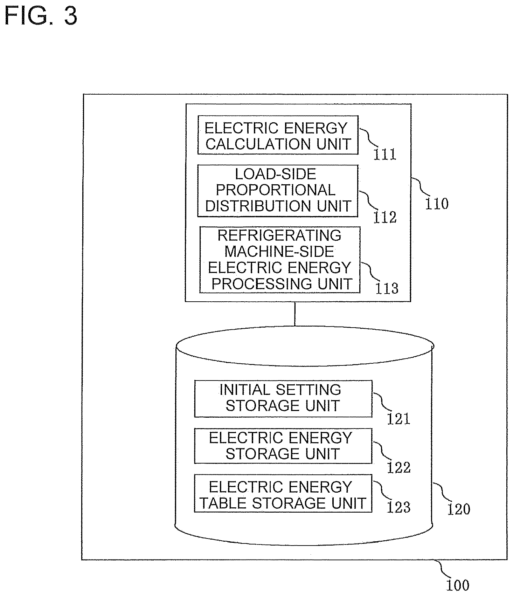

Fig. 3 is a block diagram showing a configuration of the electric energy management apparatus 100 according to Embodiment 1 of the present invention. The electric energy management apparatus 100 manages the electric energy of the cooling system. In Embodiment 1, in particular, the electric energy management apparatus 100 is configured to manage the electric energy with respect to each of the refrigerating machines 210 and each of the load-side units 220. The electric energy management apparatus 100 includes a controller 110 and a storage unit 120.

The controller 110 includes an electric energy calculation unit 111, a load-side proportional distribution unit 112, and a refrigerating machine-side electric energy processing unit. The electric energy calculation unit 111 calculates the electric energy of the cooling system on the basis of the electric energy data acquired through the measurement by the watt-hour meter 300. In addition, the electric energy calculation unit 111 calculates refrigeration cycle electric energy (total) utilized by the cooling apparatus 200 of the cooling system by causing the refrigerant to circulate, to cool the object. The load-side proportional distribution unit 112 proportionally distributes refrigerating machine-side refrigeration cycle electric energy to each of the load-side units 220 of the cooling apparatus 200, to thereby calculate load-side refrigeration cycle electric energy with respect to each of the load-side units 220. The refrigerating machine-side electric energy processing unit 113 acquires the refrigerating machine-side refrigeration cycle electric energy of each of the refrigerating machines 210. In Embodiment 1, the refrigerating machine-side electric energy processing unit 113 acquires the refrigerating machine-side refrigeration cycle electric energy by looking up a table in an electric energy table storage unit 123.

The storage unit 120 stores therein, temporarily or permanently, data required by the controller 110 for executing the operation. Specifically, the storage unit 120 according to Embodiment 1 includes an initial setting storage unit 121, an electric energy storage unit 122, and the electric energy table storage unit 123. The initial setting storage unit 121 stores therein the data of initial settings in the cooling system to be utilized by the controller 110 for executing the operation. Examples of the initial settings include the capacity of the crank case heater 215 (CH (215A), CH (215B)), the capacity of each load-side unit 220 (QHP (220A), QHP (220B), QHP (220C), QHP (220D)), and the capacity of each defrost heater 223 (DFH (225A), DFH (225B), DFH (225C), DFH (225D)). The electric energy storage unit 122 stores therein the electric energy data provided by the watt-hour meter 300 and the electric energy data of the refrigerating machines 210 and the load-side units 220 acquired through the operation of the controller 110. The electric energy table storage unit 123 contains data related to the power required by the refrigerating machines 210 for causing the refrigerant to circulate (for operating), in terms of instantaneous electric energy, in a format of a table. Further details of the electric energy table storage unit 123 will be subsequently described.

The functional units of the controller 110 according to Embodiment 1 may be constituted of independent hardware, or an arithmetic control device (computer) such as a central processing unit (CPU). In the latter case, the operation procedure may be written as a program in advance and set up as software or firmware, so that the computer can execute the program, and execute the process according to the program, thus to realize the functions assigned to each unit. The data of such a program may be, for example, stored in the storage unit 120.

Hereunder, the electric energy management performed by the electric energy management apparatus 100 according to Embodiment 1 will be described in detail. It will herein be assumed that in Embodiment 1 the electric energy management of the cooling system is performed on the basis of a unit time of 30 minutes. As a matter of course, the unit time is not limited to 30 minutes.

The electric energy calculation unit 111 calculates the overall electric energy of the cooling system according to the electric energy data acquired through the measurement by the watt-hour meter 300, and stores such data in the electric energy storage unit 122. In Embodiment 1, the watt-hour meter 300A and the watt-hour meter 300B are provided, each of which measures the electric energy utilized in the cooling system. The overall electric energy WHM (ALL) of the cooling system can be obtained through the following equation (1), in which the electric energy based on the measurement by the watt-hour meter 300A is denoted by WHM (300A) and the electric energy based on the measurement by the watt-hour meter 300B is denoted by WHM (300B).

[Math. 1]

$$\text{WHM (ALL)} = \text{WHM (300A)} + \text{WHM (300B)} \cdots (1)$$

The electric energy (kWh) of the crank case heater 215 in each of the refrigerating machines 210, namely CH (215A) electric energy and CH (215B) electric energy, can be expressed as the following equation (2). Since the power is constantly supplied to the crank case heater 215, the power (kW) of the crank case heater 215 is constant. Accordingly, although the capacity (power kW) of the crank case heater 215 is stored in the initial setting storage unit 121 in Embodiment 1, the CH (215A) electric energy kWh and the CH (215B) electric energy kWh may be stored in advance as data.

[Math. 2]

$$\text{CH ELECTRIC ENERGY (215A)} = \text{CH (215A)} \times 30 \text{ MIN.}$$

$$\text{CH ELECTRIC ENERGY (215B)} = \text{CH (215B)} \times 30 \text{ MIN.} \cdots (2)$$

The load-side proportional distribution unit 112 proportionally distributes the electric energy of the crank case heater 215 to each of the load-side units 220. Here, the load-side unit 220A and the load-side unit 220B constitute the refrigerant circuit in collaboration with the refrigerating machine 210A. Accordingly, the CH (215A) electric energy can be proportionally distributed into Q (220A) CH electric energy and Q (220B) CH electric energy as the equation (3) cited below, according to the capacity ratio (kW of HP) between the load-side unit 220A and the load-side unit 220B. Likewise, the load-side unit 220C and the load-side unit 220D constitute the refrigerant circuit in collaboration with the refrigerating machine 210B. Accordingly, the CH (215B) electric energy can be proportionally distributed into Q (220C) CH electric energy and Q (220D) CH electric energy, according to the capacity ratio between the load-side unit 220C and the load-side unit 220D. Since the electric energy of the crank case heater 215 and the capacity of the load-side units 220 are prefixed values, and therefore the Q (220A) CH electric energy and the Q (220B) CH electric energy may be stored in advance in the initial setting storage unit 121 as data.

[Math. 3]

$$Q\ (220A)\ CH\ ELECTRIC\ ENERGY = CH\ ELECTRIC\ ENERGY\ (215A) \times$$

$$QHP\ (220A)\ /\ \{QHP\ (220A) + QHP\ (220B)\}$$

$$Q\ (220B)\ CH\ ELECTRIC\ ENERGY = CH\ ELECTRIC\ ENERGY\ (215A) \times$$

$$QHP\ (220B)\ /\ \{QHP\ (220A) + QHP\ (220B)\}$$

$$Q\ (220C)\ CH\ ELECTRIC\ ENERGY = CH\ ELECTRIC\ ENERGY\ (215B) \times$$

$$QHP\ (220C)\ /\ \{QHP\ (220C) + QHP\ (220D)\}$$

$$Q\ (220D)\ CH\ ELECTRIC\ ENERGY = CH\ ELECTRIC\ ENERGY\ (215B) \times$$

$$QHP\ (220D)\ /\ \{QHP\ (220C) + QHP\ (220D)\} \cdots (3)$$

The electric energy calculation unit 111 also calculates the electric energy of each defrost heater 223, namely DHF (225A) electric energy, DHF (225B) electric energy, DHF (225C) electric energy, and DHF (225D) electric energy, according to ON-time of the defrost heater 223 of each load-side unit 220, according to the equation (4) cited below. The values of DFH (225A) (kW), DFH (225B) (kW), DFH (225C) (kW), and DFH (225D) (kW) are stored in advance in the initial setting storage unit 121 as data.

[Math. 4]

$$DFH\ (225A)\ ELECTRIC\ ENERGY = DFH\ (225A) \times DFH\ ON\ TIME\ (225A)$$

$$DFH\ (225B)\ ELECTRIC\ ENERGY = DFH\ (225B) \times DFH\ ON\ TIME\ (225B)$$

$$DFH\ (225C)\ ELECTRIC\ ENERGY = DFH\ (225C) \times DFH\ ON\ TIME\ (225C)$$

$$DFH\ (225D)\ ELECTRIC\ ENERGY = DFH\ (225D) \times DFH\ ON\ TIME\ (225D)$$

$$\cdots (4)$$

Then the electric energy calculation unit 111 calculates the electric energy utilized by the cooling apparatus 200 to operate the refrigeration cycle by causing the refrigerant to circulate in the cooling system (refrigeration cycle electric energy (total)), according to the equation (5) cited hereunder. In short, the refrigeration cycle electric energy (total) refers to a value obtained by subtracting the electric energy of the crank case heater of the load-side units 220A and 220B (driving electric energy) and the electric energy of the defrost heater in the load-side units 220A, 220B, 220C, and 220D (driving electric energy) from the total value of the watt-hour meter 300A and the watt-hour meter 300B, in other words the total value of the electric energy of the compressor 211 of the load-side units 220A and 220B, the electric energy of the refrigerating machine-side fan 213 (driving electric energy), and the electric energy of the load-side fan 222 in the load-side units 220A to 220D (driving electric energy).

The electric energy of the crank case heater (driving electric energy) and the electric energy of the defrost heater (driving electric energy) are not related to the refrigerant circulation, while the electric energy of the compressor is related to the refrigerant circulation. Further, although the electric energy of the refrigerating machine-side fan and the load-side fan is included in the electric energy necessary for the refrigerant circulation in Embodiment 1, the electric energy of those fans may be included in the electric energy unrelated to the refrigerant circulation.

[Math. 5]

REFRIGERATION CYCLE ELECTRIC ENERGY (TOTAL) = WHM (ALL) -

{CH ELECTRIC ENERGY (215A) + CH ELECTRIC ENERGY (215B)} - {DFH

(225A) ELECTRIC ENERGY + DFH (225B) ELECTRIC ENERGY + DFH (225C)

ELECTRIC ENERGY + DFH (225D) ELECTRIC ENERGY} ··· (5)

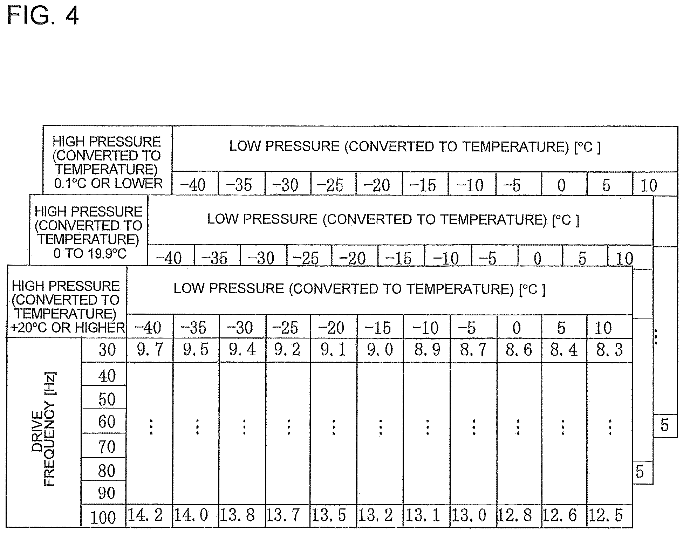

Fig. 4 includes reference tables for explaining the electric energy of the refrigerating machine 210 according to Embodiment 1 of the present invention. The electric energy of the refrigerating machine 210 is related to a high pressure and a low pressure converted to temperature in the cooling apparatus 200 (refrigerant circuit) as well as to the drive frequency of the compressor 211. The electric energy table storage unit 123 contains the data in a table format, indicating the relations among the high pressure, the low pressure, and the drive frequency of the compressor 211. Here, the high pressure and the low pressure are represented by temperatures converted therefrom.

In Fig. 4, the data of power (instantaneous power kW) is indicated in the table format, on the basis of combinations of the low pressure converted to temperature and the drive frequency of the compressor 211. The range of power is divided into three stages according to the range of the high pressure converted to temperature, and therefore three tables are prepared. The low pressure is specified from -40 degrees Celsius to 10 degrees Celsius in increments of 5 degrees Celsius. The drive frequency of the compressor 211 is specified from 30 Hz to 100 Hz in increments of 10 Hz. Though not shown in Fig. 4, tables made up with respect to the capacities may be additionally prepared, in the case where the plurality of refrigerating machines 210 are different in capacity from each other. In addition, although the range of the high pressure is divided into three stages in Fig. 4, specifying the stages in finer increments enables more accurate power (electric energy) to be acquired. Further, although the low pressure is specified in increments of 5 degrees Celsius, adopting finer increments enables more accurate power (electric energy) to be acquired.

The refrigerating machine-side electric energy processing unit 113 integrates the power for 30 minutes on the basis of the data stored in the electric energy table storage unit 123, and calculates the electric energy of the refrigerating machines 210, namely CO (210A) refrigeration cycle electric energy and CO (210B) refrigeration cycle electric energy, every 30 minutes.

For example, when the refrigerating machine 210A operates, under the high pressure (converted to temperature) of +20 degrees Celsius or higher, for 30 minutes including:

10 minutes at 9.4 kW corresponding to the low pressure (converted to temperature) -30 degrees Celsius at the drive frequency 30 Hz;
10 minutes at 9.0 kW corresponding to the low pressure (converted to temperature) -15 degrees Celsius at the drive frequency 30 Hz; and
10 minutes at 8.6 kW corresponding to the low pressure (converted to temperature) 0 degrees Celsius at the drive frequency 30 Hz;

and when the refrigerating machine 210B operates, under the high pressure (converted to temperature) of +20 degrees Celsius or higher, for 30 minutes including:

15 minutes at 9.7 kW corresponding to the low pressure (converted to temperature) -40 degrees Celsius at the drive frequency 30 Hz; and
15 minutes at 9.4 kW corresponding to the low pressure (converted to temperature) -30 degrees Celsius at the drive frequency 30 Hz;

the integral of the instantaneous power of the refrigerating machine 210A becomes 4.5 kWh (9.4 kW $\times$ 1/6h + 9.0 kW $\times$ 1/6h + 8.6 kW $\times$ 1/6h), and the integral of the instantaneous power of the refrigerating machine 210B becomes 4.775 kWh (9.7 kW $\times$ 1/4h + 9.4 kW $\times$ 1/4).
[Math. 6]

$$\text{CO (210A) REFRIGERATION CYCLE ELECTRIC ENERGY} =$$

$$\text{REFRIGERATION CYCLE ELECTRIC ENERGY (TOTAL)} \times \text{INTEGRAL OF}$$

$$\text{INSTANTANEOUS POWER OF REFRIGERATING MACHINE 210A /}$$

$$\text{(INTEGRAL OF INSTANTANEOUS POWER OF REFRIGERATING MACHINE}$$

$$\text{210A + INTEGRAL OF INSTANTANEOUS POWER OF REFRIGERATING}$$

$$\text{MACHINE 210B)}$$

$$\text{CO (210B) REFRIGERATION CYCLE ELECTRIC ENERGY} =$$

$$\text{REFRIGERATION CYCLE ELECTRIC ENERGY (TOTAL)} \times \text{INTEGRAL OF}$$

$$\text{INSTANTANEOUS POWER OF REFRIGERATING MACHINE 210B /}$$

$$\text{(INTEGRAL OF INSTANTANEOUS POWER OF REFRIGERATING MACHINE}$$

$$\text{210A + INTEGRAL OF INSTANTANEOUS POWER OF REFRIGERATING}$$

$$\text{MACHINE 210B)} \cdots (6)$$

The load-side proportional distribution unit 112 proportionally distributes the refrigeration cycle electric energy of the refrigerating machine 210 to each of the load-side units 220. As stated earlier, the load-side unit 220A and the load-side unit 220B constitute the refrigerant circuit in collaboration with the refrigerating machine 210A. Accordingly, as the equation (7) cited hereunder, CO (215A) refrigeration cycle electric energy can be proportionally distributed into Q (220A) refrigeration cycle electric energy and Q (220B) refrigeration cycle electric energy, on the basis of the ratio of use (capacity × ON time) of the refrigerating machine 210 between the load-side unit 220A and the load-side unit 220B. Likewise, the load-side unit 220C and the load-side unit 220D constitute the refrigerant circuit in collaboration with the refrigerating machine 210B. Accordingly, CO (215B) refrigeration cycle electric energy can be proportionally distributed into Q (220C) refrigeration cycle electric energy and Q (220D) refrigeration cycle electric energy, on the basis of the ratio of use between the load-side unit 220C and the load-side unit 220D.
[Math. 7]

Q (220A) REFRIGERATION CYCLE ELECTRIC ENERGY =

Q (220A) ON TIME × QHP (220A) × CO (210A) REFRIGERATION CYCLE

ELECTRIC ENERGY / {Q (220A) ON TIME × QHP (220A) + Q (220B) ON TIME

× QHP (220B)}

Q (220B) REFRIGERATION CYCLE ELECTRIC ENERGY =

Q (220B) ON TIME × QHP (220B) × CO (210A) REFRIGERATION CYCLE

ELECTRIC ENERGY / {Q (220A) ON TIME × QHP (220A) + Q (220B) ON TIME

× QHP (220B)}

Q (220C) REFRIGERATION CYCLE ELECTRIC ENERGY =

Q (220C) ON TIME × QHP (220C) × CO (210B) REFRIGERATION CYCLE

ELECTRIC ENERGY / {Q (220C) ON TIME × QHP (220C) + Q (220D) ON TIME

× QHP (220D)}

Q (220D) REFRIGERATION CYCLE ELECTRIC ENERGY =

Q (220D) ON TIME × QHP (220D) × CO (210B) REFRIGERATION CYCLE

ELECTRIC ENERGY / {Q (220C) ON TIME × QHP (220C) + Q (220D) ON TIME

× QHP (220D)} ··· (7)

With respect to the electric energy acquired through the foregoing calculation, the electric energy calculation unit 111 calculates the electric energy of each of the load-side units 220, according to the equation (8) cited below. Then the electric energy calculation unit 111 stores the data of the electric energy proportionally distributed to each of the load-side units 220, in the electric energy storage unit 122. The data stored in the electric energy storage unit 122 may be utilized, for example by a non-illustrated centralized management apparatus of the cooling system, to perform demand control, so as to prevent the overall electric energy of the cooling system from exceeding a predetermined electric energy. In addition, such data may be utilized for billing the electricity charge.
[Math. 8]

$$Q (220A) \text{ ELECTRIC ENERGY (TOTAL)} = Q (220A) \text{ REFRIGERATION}$$
$$\text{CYCLE ELECTRIC ENERGY} + DFH (225A) \text{ ELECTRIC ENERGY} + Q (220A)$$
$$\text{CH ELECTRIC ENERGY}$$

$$Q (220B) \text{ ELECTRIC ENERGY (TOTAL)} = Q (220B) \text{ REFRIGERATION}$$
$$\text{CYCLE ELECTRIC ENERGY} + DFH (225B) \text{ ELECTRIC ENERGY} + Q (220B)$$
$$\text{CH ELECTRIC ENERGY}$$

$$Q (220C) \text{ ELECTRIC ENERGY (TOTAL)} = Q (220C) \text{ REFRIGERATION}$$
$$\text{CYCLE ELECTRIC ENERGY} + DFH (225C) \text{ ELECTRIC ENERGY} + Q (220C)$$
$$\text{CH ELECTRIC ENERGY}$$

$$Q (220D) \text{ ELECTRIC ENERGY (TOTAL)} = Q (220D) \text{ REFRIGERATION}$$
$$\text{CYCLE ELECTRIC ENERGY} + DFH (225D) \text{ ELECTRIC ENERGY} + Q (220D)$$
$$\text{CH ELECTRIC ENERGY} \cdots (8)$$

As described thus far, with the electric energy management apparatus 100 according to Embodiment 1, the overall electric energy of the cooling system can be divided for each of the cooling apparatuses 200 (refrigerant circuits), and also the electric energy required for the actual cooling operation can be proportionally distributed on the basis of the capacity and the ON time of the load-side units 220, so that the overall electric energy of the cooling system can be proportionally distributed properly to each of the load-side units 220. Thus, the electric energy of each of the load-side units 220 can be properly managed, and therefore the demand control and the billing can be more properly executed. In addition, the load on the electric energy management apparatus 100 can be alleviated by proportionally distributing the refrigeration cycle electric energy (total) to each of the refrigerating machines 210 utilizing the data indicating the relations among the high pressure, the low pressure, and the drive frequency of the compressor 211 and stored in advance in the table format.

In the cooling system for cooling or freezing objects, in particular, the load-side units generally include the thermostatic expansion valve and an on/off valve unlike an indoor unit of an air-conditioning apparatus for a living space for human, which generally includes an expansion valve configured to control the opening degree in a plurality of levels according to the flow rate of the refrigerant. In such a case it is difficult to estimate or measure the flow rate of the refrigerant flowing through the load-side unit on the basis of the opening degree of the expansion valve. However, with the electric energy management apparatus 100 according to Embodiment 1, the electric energy of each of the load-side units can be accurately and easily acquired even in the mentioned case, by dividing the electric energy into the portion related to the refrigerant circulation in the load-side units (at least including the driving power of the compressor 211) and the portion unrelated to the refrigerant circulation (at least including the electric energy of the crank case heater 215 and the defrost heater 223) and then summing the electric energy related to the refrigerant circulation in each load-side unit and the electric energy unrelated to the refrigerant circulation.

Embodiment 2

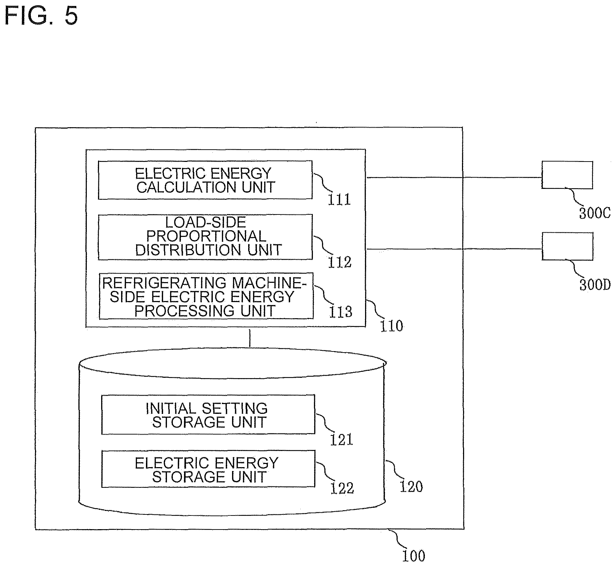

Fig. 5 is a block diagram showing a configuration of the electric energy management apparatus 100 according to Embodiment 2 of the present invention. In Embodiment 1, the electric energy management apparatus 100 includes the electric energy table storage unit 123, so that the refrigerating machine-side electric energy processing unit 113 calculates the electric energy of each of the refrigerating machines 210 every 30 minutes, on the basis of the data stored in the electric energy table storage unit 123. In Embodiment 2, in contrast, the refrigerating machine-side electric energy processing unit 113 proportionally distributes the refrigeration cycle electric energy (total) to each of the refrigerating machines 210, to thereby calculate the refrigerating machine-side refrigeration cycle electric energy of each of the refrigerating machines 210. For such purpose, the electric energy management apparatus 100 includes watt-hour meters 300C and 300D for measuring the electric energy of the respective refrigerating machines 210.

The refrigerating machine-side electric energy processing unit 113 proportionally distributes the refrigeration cycle electric energy (total) to the refrigerating machines 210 on the basis of the electric energy utilized for the refrigeration cycle operation of the refrigerating machines 210 and measured by the watt-hour meters 300C and 300D every 30 minutes through the following equation (9), thereby acquiring CO (215A) refrigeration cycle electric energy and CO (215B) refrigeration cycle electric energy.

[Math. 9]

$$\text{CO (210A) REFRIGERATION CYCLE ELECTRIC ENERGY} =$$

$$\text{REFRIGERATION CYCLE ELECTRIC ENERGY (TOTAL)} \times \text{CO (210A) ON}$$

$$\text{TIME} / \{\text{CO (210A) ON TIME} + \text{CO (210B) ON TIME}\}$$

$$\text{CO (210B) REFRIGERATION CYCLE ELECTRIC ENERGY} =$$

$$\text{REFRIGERATION CYCLE ELECTRIC ENERGY (TOTAL)} \times \text{CO (210B) ON}$$

$$\text{TIME} / \{\text{CO (210A) ON TIME} + \text{CO (210B) ON TIME}\} \cdots (9)$$

As described above, in the electric energy management apparatus 100 according to Embodiment 2, the refrigerating machine-side electric energy processing unit 113 proportionally distributes, through calculation, the refrigeration cycle electric energy (total) to each of the refrigerating machines 210, and therefore the proportional distribution can be properly performed on the basis of the actual refrigeration cycle electric energy.

Embodiment 3

In Embodiment 1, the electric energy calculation unit 111 proportionally distributes the refrigeration cycle electric energy (total) to each of the refrigerating machines 210 every 30 minutes, according to the data stored in the electric energy table storage unit 123.

When any of the refrigerating machines 210 includes a power sensor, the relation among the high pressure, the low pressure, and the drive frequency of the compressor 211, and the power (instantaneous electric energy) can be detected. Accordingly, the data in the electric energy table storage unit 123 may be overwritten on the basis of the power detected by the power sensor. In Embodiment 3, the content (data) of the electric energy table storage unit 123 is overwritten on the basis of a difference between the average of the power detected by the power sensor and the power according to the data in the electric energy table storage unit 123.

For example, in the high pressure table the electric energy corresponding to the drive frequency of 30 Hz of the compressor 211 and the temperature of 10 degrees Celsius converted from the low pressure is 8.3 kW, as shown in Fig. 4. Here, it will be assumed that the average of power actually detected by the power sensor under the same high pressure, low pressure, and drive frequency of the compressor 211 is 8.5 kW. In this case, the data in the electric energy table storage unit 123 is overwritten by 8.4 kW, calculated as 8.3 + (8.5 - 8.3)/2, as updated data. The electric energy table storage unit 123 may be utilized to calculate the refrigeration cycle electric energy of the refrigerating machine 210 without the power sensor.

The data in the table of the initial settings may be overwritten, however a table to be looked up for example by the electric energy calculation unit 111 may be additionally prepared, and the table of the initial settings may be restricted from being overwritten.

As described above, in the electric energy management apparatus 100 according to Embodiment 3, the data in the electric energy table storage unit 123 is overwritten on the basis of the power detected by the power sensor. Therefore, the overall electric energy of the cooling system can be proportionally distributed to each of the load-side units 220 properly, on the basis of the refrigeration cycle electric energy that has been acquired with higher accuracy.

Embodiment 4

In Embodiments 1 to 3, the electric energy is proportionally distributed to each of the load-side units 220, however the present invention is not limited to such an arrangement. For example, the load-side unit 220C and the load-side unit 220D both cool the same space inside the refrigerator C. Therefore, the tow load-side units 220 may be grouped into a set, so that the electric energy is managed with respect to the set.

Embodiment 5.

Although the electric energy management apparatus 100 is configured to manage the electric energy of the cooling system in Embodiments 1 to 4, for example a controller of a centralized management apparatus that collectively controls the cooling apparatuses 200 may manage the electric energy. Alternatively, the load-side units may each manage the electric energy. Reference Signs List

100: electric energy management apparatus, 110: controller, 111: electric energy calculation unit, 112: load-side proportional distribution unit, 113: refrigerating machine-side electric energy processing unit, 120: storage unit, 121: initial setting storage unit, 122: electric energy storage unit, 123: electric energy table storage unit, 200, 200A, 200B: cooling apparatus, 210, 210A, 210B: refrigerating machine, 211: compressor, 212: condenser, 213: refrigerating machine-side fan, 214: refrigerating machine flow rate control device, 215: crank case heater, 216: refrigerating machine control unit, 220, 220A, 220B, 220C, 220D: load-side unit, 221: evaporator, 222: load-side fan, 223: defrost heater, 230, 230A, 230B, 230C: remote controller, 300, 300A, 300B, 300C, 300D: watt-hour meter

## Claims

1. An electric energy management apparatus (100) for cooling system configured to manage power of the cooling system including a refrigerant circuit in which refrigerant circulates through a plurality of refrigerating machines (210) and a plurality of evaporators (220) connected to the refrigerating machines (210) via a pipe and cooling a space, wherein

   each refrigerating machine (210) comprises: a compressor (211), a crank case heater (215) having constant power, a condenser (212) and a machine-side fan (213), the crank case heater (215) being configured to heat the condenser (212); and
   each evaporator (220) comprises: a defrost heater (223) having constant power, and an evaporator-side fan (222),
   the electric energy management apparatus (100) comprising:

      a watt-hour meter (300) configured to measure power per unit time supplied to the compressors (211), the crank case heaters (215), the refrigerating machine-side fans (213) in the refrigerating machines (210), as well as to the evaporator-side fans (222) and the defrost heaters (223) of the evaporators (220) and acquire electric energy data through the measurement;
      a refrigerating machine-side electric energy processing unit (113) configured to calculate electric energy required for refrigerant circulation in the refrigerant circuit with respect to all of the refrigerating machines (210), based on electric energy obtained by subtracting a sum of electric energy required by the crank case heaters (215) and the defrost heaters (223) from overall electric energy according to the acquired electric energy data ;
      a load-side proportional distribution unit (112) configured to proportionally distribute, according to capacities of the evaporators (220), the calculated electric energy required for the refrigerant circulation in the refrigerant circuit with respect to all of the refrigerating machines (210), thereby calculating electric energy required for the refrigerant circulation in the refrigerant circuit with respect to each of the evaporators (220), and calculating electric energy required by the respective defrost heater (223) with respect to each of the evaporators (220); and
      an electric energy calculation unit (111) configured to calculate, for each of the evaporators (220), electric energy of the respective evaporator (220) by adding the electric energy required by the respective defrost heater (223) to the electric energy required for the refrigerant circulation in the refrigerant circuit with respect to the respective evaporator (220) obtained by the load-side proportional distribution unit (112).

2. The electric energy management apparatus (100) for cooling system of claim 1, further comprising an electric energy table storage unit (123) containing a table representing data of power per unit time determined by a plurality of parameters,
   wherein the refrigerating machine-side electric energy processing unit (113) integrates the power per unit time based on the table stored in the electric energy table storage unit (123), thereby calculating the electric energy required for the refrigerant circulation in the refrigerant circuit.

3. The electric energy management apparatus (100) for cooling system of claim 2,
   wherein the plurality of parameters include a pressure on a high pressure side of the refrigerant circuit, a pressure on a low pressure side of the refrigerant circuit, and drive frequency of the compressor (211) provided in the refrigerating machine (210).

4. The electric energy management apparatus (100) for cooling system of claim 1, wherein the watt-hour meter (300) is configured to measure the electric energy of each of the refrigerating machines (210), and
the refrigerating machine-side electric energy processing unit (113) is configured to calculate the electric energy consumed for the refrigerant circulation in the refrigerant circuit based on the electric energy of each of the refrigerating machines (210).

5. The electric energy management apparatus (100) for cooling system of claim 2 or 3, further comprising a power sensor configured to measure power per unit time of each of the refrigerating machines (210),
wherein the electric energy management apparatus (100) is configured to correct the electric energy table storage unit (123) according to the power measured by the power sensor.

**Patentansprüche**

1. Vorrichtung (100) zur Verwaltung von elektrischer Energie für ein Kühlsystem, die ausgebildet ist, die Leistung des Kühlsystems zu verwalten, das einen Kältemittelkreis enthält, in dem Kältemittel durch eine Mehrzahl von Kältemaschinen (210) und eine Mehrzahl von Verdampfern (220) zirkuliert, die mit den Kältemaschinen (210) über eine Leitung verbunden sind und einen Raum kühlen, wobei

jede Kältemaschine (210) umfasst: einen Verdichter (211), eine Kurbelgehäuseheizung (215) mit konstanter Leistung, einen Verflüssiger (212) und einen maschinenseitigen Ventilator (213), wobei die Kurbelgehäuseheizung (215) ausgebildet ist, den Verflüssiger (212) zu erwärmen; und
jeder Verdampfer (220) umfasst: eine Abtauheizung (223) mit konstanter Leistung und einen verdampferseitigen Ventilator (222),
wobei die Vorrichtung (100) zur Verwaltung von elektrischer Energie umfasst:

einen Wattstundenzähler (300), der ausgebildet ist, die Leistung pro Zeiteinheit zu messen, die den Verdichtern (211), den Kurbelgehäuseheizungen (215), den kältemaschinenseitigen Ventilatoren (213) in den Kältemaschinen (210) sowie den verdampferseitigen Ventilatoren (222) und den Abtauheizungen (223) der Verdampfer (220) zugeführt wird, und durch die Messung elektrische Energiedaten zu erfassen;
eine kältemaschinenseitige elektrische Energieverarbeitungseinheit (113), die ausgebildet ist, die elektrische Energie zu berechnen, die für den Kältemittelumlauf in dem Kältemittelkreis in Bezug auf alle Kältemaschinen (210) erforderlich ist, und zwar auf der Grundlage der elektrischen Energie, die durch Subtraktion der Summe der elektrischen Energie, die von den Kurbelgehäuseheizungen (215) und den Abtauheizungen (223) benötigt wird, von der gesamten elektrischen Energie gemäß den erfassten elektrischen Energiedaten erhalten wird;
eine lastseitige Proportionalverteileinheit (112), die ausgebildet ist, die berechnete elektrische Energie, die für den Kältemittelumlauf in dem Kältemittelkreis erforderlich ist, entsprechend den Kapazitäten der Verdampfer (220) proportional auf alle Kältemaschinen (210) zu verteilen, wodurch die elektrische Energie berechnet wird, die für den Kältemittelumlauf in dem Kältemittelkreis in Bezug auf jeden der Verdampfer (220) erforderlich ist, und die elektrische Energie berechnet wird, die von der jeweiligen Abtauheizung (223) in Bezug auf jeden der Verdampfer (220) erforderlich ist; und
eine Berechnungseinheit (111) der elektrischen Energie, die ausgebildet ist, für jeden der Verdampfer (220) die elektrische Energie des jeweiligen Verdampfers (220) zu berechnen, indem sie die elektrische Energie, die von der jeweiligen Abtauheizung (223) benötigt wird, zu der elektrischen Energie addiert, die für den Kältemittelumlauf in dem Kältemittelkreis in Bezug auf den jeweiligen Verdampfer (220) benötigt wird, die von der lastseitigen Proportionalverteileinheit (112) erhalten wird.

2. Vorrichtung (100) zur Verwaltung von elektrischer Energie für ein Kühlsystem nach Anspruch 1, das ferner eine Speichereinheit (123) für eine Tabelle der elektrischen Energie umfasst, die eine Tabelle enthält, die Daten zur Leistung pro Zeiteinheit darstellt, die durch eine Mehrzahl von Parametern bestimmt werden,
wobei die kältemaschinenseitige elektrische Energieverarbeitungseinheit (113) die Leistung pro Zeiteinheit auf der Grundlage der in der Speichereinheit (123) für eine Tabelle der elektrischen Energie gespeicherten Tabelle integriert, wodurch die für den Kältemittelumlauf in dem Kältemittelkreis erforderliche elektrische Energie berechnet wird.

**3.** Vorrichtung (100) zur Verwaltung von elektrischer Energie für ein Kühlsystem nach Anspruch 2, wobei die Mehrzahl von Parametern einen Druck auf einer Hochdruckseite des Kältemittelkreises, einen Druck auf einer Niederdruckseite des Kältemittelkreises und die Antriebsfrequenz des in der Kältemaschine (210) vorgesehenen Verdichters (211) umfasst.

**4.** Vorrichtung (100) zur Verwaltung von elektrischer Energie für ein Kühlsystem nach Anspruch 1, wobei der Wattstundenzähler (300) ausgebildet ist, die elektrische Energie jeder der Kältemaschinen (210) zu messen, und die kältemaschinenseitige elektrische Energieverarbeitungseinheit (113) ausgebildet ist, die für den Kältemittelumlauf in dem Kältemittelkreis verbrauchte elektrische Energie auf der Grundlage der elektrischen Energie jeder der Kältemaschinen (210) zu berechnen.

**5.** Vorrichtung (100) zur Verwaltung von elektrischer Energie für ein Kühlsystem nach Anspruch 2 oder 3, die ferner einen Leistungssensor umfasst, der ausgebildet ist, die Leistung pro Zeiteinheit jeder der Kältemaschinen (210) zu messen, wobei die Vorrichtung (100) zur Verwaltung elektrischer Energie ausgebildet ist, die Speichereinheit (123) für eine Tabelle der elektrischen Energie entsprechend der von dem Leistungssensor gemessenen Leistung zu korrigieren.

**Revendications**

**1.** Appareil de gestion d'énergie électrique (100) pour système de refroidissement configuré pour gérer la puissance du système de refroidissement comprenant un circuit de réfrigérant dans lequel le réfrigérant circule à travers une pluralité de machines frigorifiques (210) et une pluralité d'évaporateurs (220) connectés aux machines frigorifiques (210) par un tuyau et refroidissant un espace, dans lequel

chaque machine frigorifique (210) comprend : un compresseur (211), un dispositif de chauffage de carter (215) ayant une puissance constante, un condenseur (212) et un ventilateur côté machine (213), le dispositif de chauffage de carter (215) étant configuré pour chauffer le condenseur (212) ; et
chaque évaporateur (220) comprend : un chauffage de dégivrage (223) ayant une puissance constante, et un ventilateur côté évaporateur (222),
l'appareil de gestion d'énergie électrique (100) comprenant :

un wattheuremètre (300) configuré pour mesurer la puissance par unité de temps fournie aux compresseurs (211), aux dispositifs de chauffage de carter (215), aux ventilateurs (213) côté machine frigorifique dans les machines frigorifiques (210), ainsi qu'aux ventilateurs (222) côté évaporateur et aux chauffages de dégivrage (223) des évaporateurs (220) et acquérir des données d'énergie électrique par la mesure ;
une unité de traitement d'énergie électrique côté machine frigorifique (113) configurée pour calculer l'énergie électrique requise pour la circulation du réfrigérant dans le circuit de réfrigérant par rapport à toutes les machines frigorifiques (210), sur la base de l'énergie électrique obtenue en soustrayant une somme d'énergie électrique requise par les dispositifs de chauffage de carter (215) et les chauffages de dégivrage (223) de l'énergie électrique globale selon les données d'énergie électrique acquises ;
une unité de distribution proportionnelle côté charge (112) configurée pour distribuer proportionnellement, selon les capacités des évaporateurs (220), l'énergie électrique calculée requise pour la circulation du réfrigérant dans le circuit réfrigérant par rapport à toutes les machines frigorifiques (210), calculant ainsi l'énergie électrique requise pour la circulation du réfrigérant dans le circuit réfrigérant par rapport à chacun des évaporateurs (220), et calculant l'énergie électrique requise par le chauffage de dégivrage (223) respectif par rapport à chacun des évaporateurs (220) ; et
une unité de calcul d'énergie électrique (111) configurée pour calculer, pour chacun des évaporateurs (220), l'énergie électrique de l'évaporateur (220) respectif en ajoutant l'énergie électrique requise par le chauffage de dégivrage (223) respectif à l'énergie électrique requise pour la circulation du réfrigérant dans le circuit de réfrigérant par rapport à l'évaporateur (220) respectif obtenue par l'unité de distribution proportionnelle côté charge (112).

**2.** Appareil de gestion d'énergie électrique (100) pour système de refroidissement selon la revendication 1, comprenant en outre une unité de stockage de tableau d'énergie électrique (123) contenant un tableau représentant des données de puissance par unité de temps déterminées par une pluralité de paramètres, dans lequel l'unité de traitement d'énergie électrique côté machine frigorifique (113) intègre la puissance par unité de temps sur la base du tableau stocké dans l'unité de stockage de tableau d'énergie électrique (123), calculant ainsi l'énergie électrique requise pour la circulation du réfrigérant dans le circuit de réfrigérant.

3. Appareil de gestion d'énergie électrique (100) pour système de refroidissement de la revendication 2, dans lequel la pluralité de paramètres comprend une pression d'un côté haute pression du circuit de réfrigérant, une pression d'un côté basse pression du circuit de réfrigérant, et une fréquence d'entraînement du compresseur (211) prévu dans la machine frigorifique (210).

4. Appareil de gestion d'énergie électrique (100) pour système de refroidissement selon la revendication 1, dans lequel le wattheuremètre (300) est configuré pour mesurer l'énergie électrique de chacune des machines frigorifiques (210), et
l'unité de traitement d'énergie électrique côté machine frigorifique (113) est configurée pour calculer l'énergie électrique consommée pour la circulation du réfrigérant dans le circuit de réfrigérant sur la base de l'énergie électrique de chacune des machines frigorifiques (210).

5. Appareil de gestion d'énergie électrique (100) pour système de refroidissement selon la revendication 2 ou 3, comprenant en outre un capteur de puissance configuré pour mesurer la puissance par unité de temps de chacune des machines de réfrigération (210),
dans lequel l'appareil de gestion d'énergie électrique (100) est configuré pour corriger l'unité de stockage de tableau d'énergie électrique (123) selon la puissance mesurée par le capteur de puissance.

FIG. 1

FIG. 2

EP 3 203 167 B1

# FIG. 3

ELECTRIC ENERGY
CALCULATION UNIT — 111

LOAD-SIDE
PROPORTIONAL
DISTRIBUTION UNIT — 112

REFRIGERATING
MACHINE-SIDE
ELECTRIC ENERGY
PROCESSING UNIT — 113

110

INITIAL SETTING
STORAGE UNIT — 121

ELECTRIC ENERGY
STORAGE UNIT — 122

ELECTRIC ENERGY
TABLE STORAGE UNIT — 123

120

100

18

FIG. 4

| HIGH PRESSURE (CONVERTED TO TEMPERATURE) 0.1°C OR LOWER | LOW PRESSURE (CONVERTED TO TEMPERATURE) [°C ] | | | | | | | | | | |
|---|---|---|---|---|---|---|---|---|---|---|---|
| | −40 | −35 | −30 | −25 | −20 | −15 | −10 | −5 | 0 | 5 | 10 |

| HIGH PRESSURE (CONVERTED TO TEMPERATURE) 0 TO 19.9°C | LOW PRESSURE (CONVERTED TO TEMPERATURE) [°C ] | | | | | | | | | | |
|---|---|---|---|---|---|---|---|---|---|---|---|
| | −40 | −35 | −30 | −25 | −20 | −15 | −10 | −5 | 0 | 5 | 10 |

| HIGH PRESSURE (CONVERTED TO TEMPERATURE) +20°C OR HIGHER | | LOW PRESSURE (CONVERTED TO TEMPERATURE) [°C ] | | | | | | | | | | |
|---|---|---|---|---|---|---|---|---|---|---|---|---|
| | | −40 | −35 | −30 | −25 | −20 | −15 | −10 | −5 | 0 | 5 | 10 |
| DRIVE FREQUENCY [Hz] | 30 | 9.7 | 9.5 | 9.4 | 9.2 | 9.1 | 9.0 | 8.9 | 8.7 | 8.6 | 8.4 | 8.3 |
| | 40 | | | | | | | | | | | |
| | 50 | | | | | | | | | | | |
| | 60 | ⋮ | ⋮ | ⋮ | ⋮ | ⋮ | ⋮ | ⋮ | ⋮ | ⋮ | ⋮ | ⋮ |
| | 70 | | | | | | | | | | | |
| | 80 | | | | | | | | | | | |
| | 90 | | | | | | | | | | | |
| | 100 | 14.2 | 14.0 | 13.8 | 13.7 | 13.5 | 13.2 | 13.1 | 13.0 | 12.8 | 12.6 | 12.5 |

# FIG. 5

```
┌─────────────────────────────────────────────────────────┐
│  ┌───────────────────────────────────────┐              │       ┌──────────┐
│  │  ┌─────────────────────────────────┐  │              │───────│          │
│  │  │    ELECTRIC ENERGY              │  │              │       └──────────┘
│  │  │    CALCULATION UNIT        ╲111 │  │              │         300C
│  │  └─────────────────────────────────┘  │              │
│  │  ┌─────────────────────────────────┐  │              │       ┌──────────┐
│  │  │    LOAD-SIDE                    │  │              │───────│          │
│  │  │    PROPORTIONAL                 │  │              │       └──────────┘
│  │  │    DISTRIBUTION UNIT       ╲112 │  │              │         300D
│  │  └─────────────────────────────────┘  │              │
│  │  ┌─────────────────────────────────┐  │              │
│  │  │ REFRIGERATING MACHINE-          │  │              │
│  │  │ SIDE ELECTRIC ENERGY            │  │              │
│  │  │ PROCESSING UNIT           ╲113  │ ╲110            │
│  │  └─────────────────────────────────┘  │              │
│  └───────────────────────────────────────┘              │
│              ┌──────────────────────────┐               │
│              │  ┌────────────────────┐  │               │
│              │  │  INITIAL SETTING   │  │               │
│              │  │  STORAGE UNIT ╲121 │  │               │
│              │  └────────────────────┘  │               │
│              │  ┌────────────────────┐  │               │
│              │  │  ELECTRIC ENERGY   │  │  ╲120         │
│              │  │  STORAGE UNIT ╲122 │  │               │
│              │  └────────────────────┘  │               │
│              └──────────────────────────┘               │
└─────────────────────────────────────────────────────────┘
                         ╲100
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003322381 A
- JP 2003130435 A